# EUROPÄISCHE PATENTSCHRIFT

(11) **EP 1 887 231 B1**
(45) Veröffentlichungstag und Bekanntmachung des Hinweises auf die Patenterteilung: **14.10.2009**
(21) Anmeldenummer: 06291306.6
(22) Anmeldetag: 11.08.2006
(51) Int. Cl.: F16B 21/08, F16B 19/00

(54) **Vorrichtung zur befestigung von bauteilen an einem tragerteil**
Device for fastening elements to a support
Dispositif pour la fixation d'éléments contre un support

(43) Veröffentlichungstag der Anmeldung: 13.02.2008
(73) Patentinhaber: Lisi Automotive Rapid, 95650 Puiseux Pontoise (FR)
(72) Erfinder: Senftleber, Markus, 68775 Ketsch (DE); Demel, Otto, 69123 Heidelberg (DE); Endres, Markus, 69214 Eppelheim (DE)
(74) Vertreter: Berger, Helmut

(56) Entgegenhaltungen:
- EP-A1- 0 848 171
- US-A- 5 468 108

## Beschreibung

Die Erfindung betrifft eine Vorrichtung zur Befestigung von Bauteilen wie Blechen, Dämmaterialien oder Matten an Trägerteilen wie Automobilkarrosserien, mit einem Befestigungsstopfen, der ein Kopfteil, einen das Trägerteil hintergreifenden und einen durch Löcher im Bauteil und im Trägerteil durchsteckbaren Fußteil und einen den Kopf mit dem Fußteil verbindenden Mittelteil besitzt, vgl. US-A-5 468 108.

Die Befestigungsvorrichtungen dieser Art, die bekannt sind, besitzen den Nachteil, daß sie eine verhältnismässig große Montagekraft benötigen und die Montage sowie die Demontage verhältnismässig kompliziert sind.

Der Erfindung liegt die Aufgabe zugrunde, eine Befestigungsvorrichtung zu schaffen, die diese Nachteile nicht besitzt.

Zur Lösung dieser Aufgabe ist die erfindungsgemäße Vorrichtung u.a. dadurch charakterisiert, daß der Rastfuß beim Durchstecken elastisch zur Achse hin ausweichenden und nach dem Durchstecken wieder seine Orientierung einnimmt.

Weitere Merkmale der Erfindung sind in Unteransprüchen beschrieben.

Im folgenden wird die Erfindung unter Bezugnahme auf die abgebildenden Abbildungen näher beschrieben.

Die Figur 1 ist eine Seitenansicht eines zwei Bauteile miteinander verbindenden erfindungsgemäßen Befestigungsstopfens.

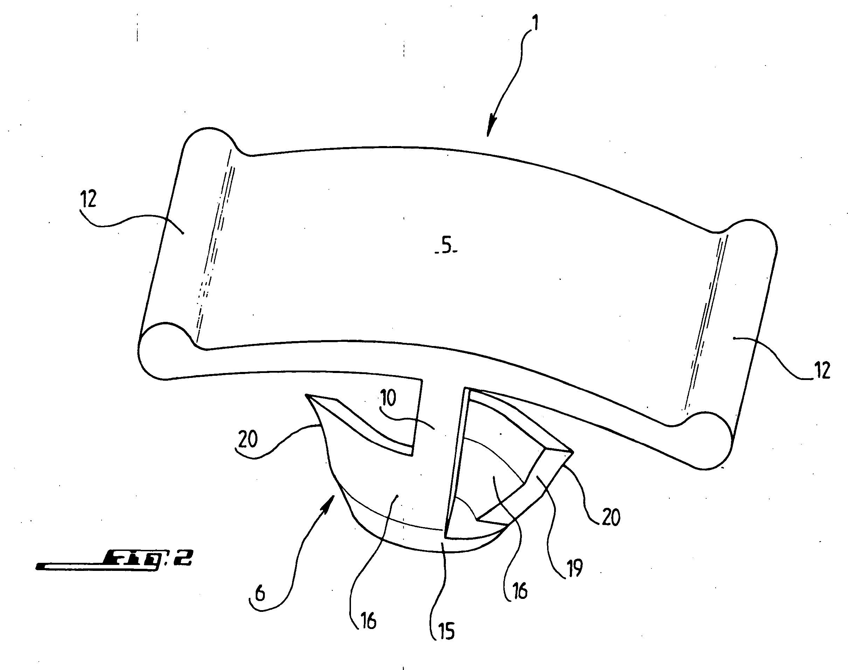

Die Figur 2 ist eine perspektivische Ansicht einer ersten Ausführungsvariante des erfindungsgemäßen Befestigungsstopfens.

Die Figur 3 ist eine Draufsicht auf dem Befestigungsstopfen der Figur 1.

Die Figur 4 ist eine Seitenansicht in Richtung des Pfeils IV der Figur 3.

Die Figur 5 ist eine Seitenansicht einer anderen Ausführungsvariante eines erfindungsgemäßen Befestigungsstopfens.

Die Figur 6 ist eine Draufsicht auf den Befestigungsstopfen gemäß der Figur 5.

Die Figur 7 ist eine perspektivische Ansicht einer anderen Ausführungsform des erfindungsgemässen Befestigungsstopfens.

Die Figur 8 ist eine Seitenansicht des Befestigungsstopfens der Figur 7, in verkleinertem Maßstab.

Die Figur 9 ist eine Seitenansicht des erfindungsgemässen Stopfens, die um einen rechten Winkel gegenüber der Figur 8 versetzt ist.

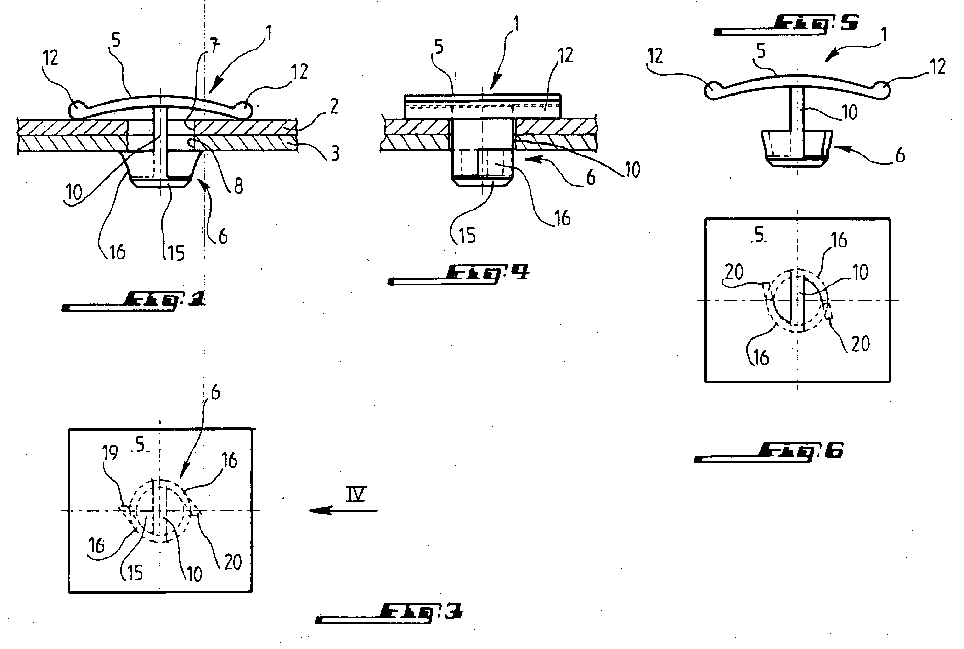

Die Figur 1 zeigt eine erfindungsgemäße Befestigungsvorrichtung, mit einem Befestigungsstopfen 1, der ein flächiges Bauteil 2, wie ein Blech, ein Dämmaterialteil oder eine Matte, an einem Trägerteil 3, das z.B. zu einer Automobilkarrosserie gehört, befestigt.

Der erfindungsgemäße Befestigungsstopfen besitzt einen flächigen, im Beispielfall rechteckigen leicht gewölbten Kopf 5, einen als Rastfuß ausgebildeten Fußteil 6, der durch zwei miteinander fluchtende Aufnahmelöcher 7, 8 in den Teilen 2 und 3 hindurchgesteckt und hinter dem Karrosserieteil 3 verrastet ist. Der Kopfteil 1 und der Rastfußteil 6 sind miteinander durch einen mittleren als Steg 10 ausgebildeten Bereich miteinander verbunden. Wie insbesondere aus der Figur 1 hervorgeht, ist der Kopf 1 gewölbt, damit er in der Befestigungsstellung des Stopfes 1 mit seinen wulstigen Rändern 12 an der Oberfläche des Bauteiles 2 angepreßt anliegen kann. Die Wölbung hat die Aufgabe, dank der elastischen Verformung des Kopfes nach dem Durchstecken des Stopfens in die Verraststellung das beim Hintergreifen des Karrosserieteils 3 durch das Fußteil entstehende Spiel zu kompensieren.

Der Rastfuß 6 besitzt die Form eines Topfes mit einem kreisförmigen Boden 15 und einer unwesentlichen zylindrischen Seitenwand, von der lediglich zwei einander diametral gegenüberliegenden Segmente 16 vorhanden sind, die sich jeweils von einem Seitenrand des Stegs 10 im wesentlichen über einen vorbestimmten Winkel, zwischen 45° und 135°, zum Beispiel von 90°, erstrecken. Der vom Steg abgewandte Seitenrand 19 jedes Segments 17 verläuft von seinem Ausgangspunkt am Boden 15 schräg nach aussen. Der obere zum Kopf hin gewandte Bereich ist nach aussen abgebogen, sodaß ein zackenförmige Rastflügel 20 entsteht, der bei einem Durchstecken des Rastfußes durch die Löcher 7, 8 in dem zwei Bauteilen elastisch zur Achsen auslenkbar ist und hinter dem Trägerteil wieder nach aussen ausfedert und den Verbindungsstopfen hinter dem Trägerteil 3 verrastet.

Die Figuren 5 und 6 zeigen eine Ausführungsvariante, bei der die freien, federnden Flügel 20 sich im wesentlichen tangential erstrecken und eine Länge haben, die grösser ist als die der Flügel der ersten Ausführungsvariante.

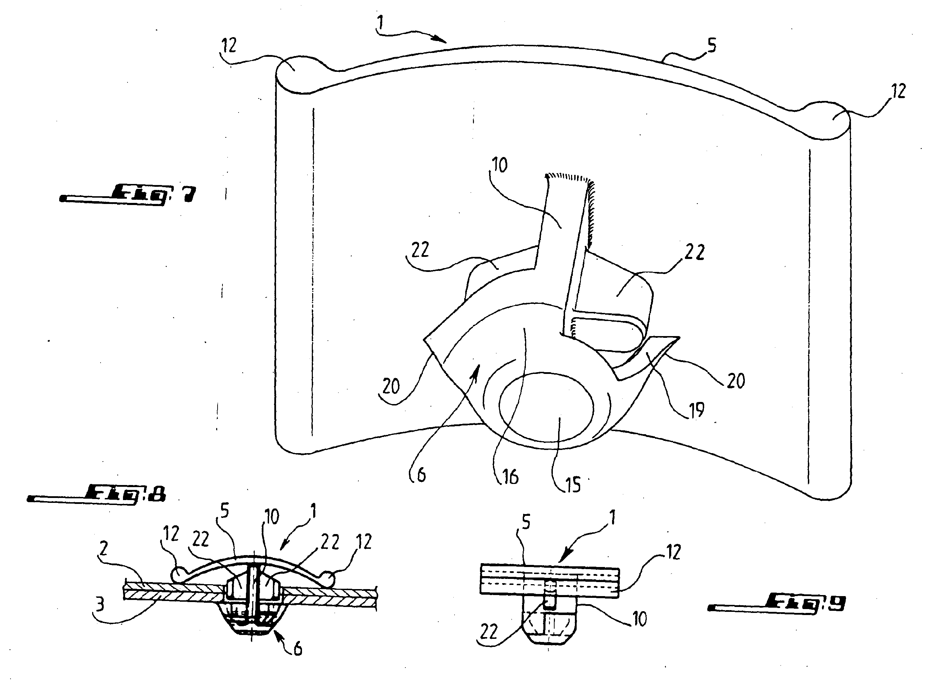

Die Figuren 7 bis 9 zeigen eine Ausführungsform des Stopfens, bei der der Steg 10 zwischen dem Kopf 5 und dem Rastfuß 6 eine sich diametral erstreckende Rippe 22 besitzt, deren Abmasse quer zur Achse des Stopfens etwas kleiner sind als der Durchmesser der Durchstecklöcher 7, 8, sodaß die Rippe zur Zentrierung des Stopfens beim Durchstecken dienen kann. Um die Wölbung des Kopfes, die die Aufgabe hat, durch ihre elastische Verformung infolge des Ausfederns der Rastflügel das nach dem Durchstecken entstehendes Spiel auszugleichen, nicht zu beeinträchtigen, beginnt die Zusatzrippe erst in einem entsprechenden axialen Abstand vom Kopf.

Die Wölbung des Kopfes 5 des Stopfens bewirkt nicht nur ein Ausgleich des Spiels, der durch die möglicherweise vorhandene axiale Komponente des Zurückfederns der Rastflügel hinter dem Karrosserieteil entstehen kann, sondern auch eine Aufnahme möglicher Dickenabweichungen. Bezüglich der axialen Ausfederungskomplemente ist zu bemerken, daß diese dank der im wesentlichen tangentialen Ausrichtung der Rastflügel im Idealfall nicht mehr vorhanden ist, da die Flügel nach dem Durchstecken entlang der Unterfläche des Karrosserieteils gleiten. Durch Versetzen der Anbindung der Flügel am Topf in Richtung zum Kopf hin, kann die gegebenenfalls noch vorhandene restliche axiale Rückfederungskomponente noch weiter verringert werden.

Die erfindungsgemäßen Befestigungsstopfen sind vorzugsweise aus Kunststoff hergestellt. Durch die gedrehte von den Flügeln 20 gebildete Rastform des Fußes der Stopfen wird für das Ausfedern hinter dem Loch des Trägerteils eine geringere Weg-Toleranz im Vergleich zu den bekannten Stopfen, benötigt. Dank dieser Form wird die Montagekraft bei gleich bleibender Demontagekraft deutlich gesenkt. Eine seitliche Belastung auf die Rastfüße und das damit verbundene Setzen des Kunststoff, welches bei Vibrationen zu einem Herausfallen der bekannten Stopfen führt, wird vermieden.

## Patentansprüche

1. Vorrichtung zur Befestigung von Bauteilen wie Blechen, Dämmaterialien oder Matten an Trägerteilen wie Automobilkarrosserien, mit einem Befestigungsstopfen, der ein Kopfteil, ein das Trägerteil hintergreifenden und durch Löcher im Bauteil und im Trägerteil durchsteckbaren, als hinter dem Trägerteil verrastbaren Rastfuß ausgebildeten Fußteil und ein den Kopf mit dem Trägerteil verbindenden Mittelteil besitzt, **dadurch gekennzeichnet, daß** der Rastfuß (6) wenigstens einen sich von einer im wesentlichen zylindrischen Gestalt nach aussen erstreckenden Rastflügel (20) besitzt, der beim Durchstecken durch die Löcher (7, 8) im Bauteil und im Trägerteil elastisch zur Achse hin ausweicht und nach dem Durchstecken wieder seine nach aussen gerichtete Orientierung zur Verrastung hinter dem Trägerteil einnimmt wobei der Rastfuß (6) von einer Topfform ausgehend ausgebildet ist und wenigstens ein aus der Seitenwand des Topfes ausgeschnittenes Segment (16) besitzt, das sich umfangsmässig über einen bestimmten Winkel erstreckt und daß wenigstens einer seiner freien Randbereiche als Rastflügel (20) ausgebildet ist.

2. Vorrichtung nach Anspruch 1, **dadurch gekennzeichnet, daß** der Fußteil (6) des Befestigungsstopfens zwei einander diametral gegenüberliegende Rastflügel (20) besitzt.

3. Vorrichtung nach Anspruch 1 oder 2, **dadurch gekennzeichnet, daß** der Boden (15) des Topfes am freien Ende eines Steges (10), der den Mittelteil bildet, angeformt ist.

4. Vorrichtung nach Anspruch 3, **dadurch gekennzeichnet, daß** der Steg (10) eine Breite besitzt, die gleich dem Durchmesser des Topfbodens (15) ist und daß ein Segment (16) sich von dem Steg aus in Umfangsrichtung um den genannten vorgenannten Winkel erstreckt.

5. Vorrichtung nach Anspruch 4, **dadurch gekennzeichnet, daß** der freie Seitenrand (19) eines Segments (16) bezogen auf eine radiale Ebene geneigt ist, sodaß der freie Umfangsrand des Segments länger ist als der Umfangsrand im Bereich des Topfbodens (15) und daß der freie Endbereich des Segments den genannten Rastflügel (20) bildet.

6. Vorrichtung nach Anspruch 5, **dadurch gekennzeichnet, daß** der Rastflügel durch seitliches Ausformen des freien Endes des Segments entstanden ist.

7. Vorrichtung nach Anspruch 5, **dadurch gekennzeichnet, daß** der Rastflügel sich tangential erstreckt.

8. Vorrichtung nach einem der Ansprüche 1 bis 7, **dadurch gekennzeichnet, daß** der Umfangswinkel des Segments in der Größenordnung von 45° bis 135°, vorzugsweise von 90° liegt.

9. Vorrichtung nach einem der Ansprüche 1 bis 8, **dadurch gekennzeichnet, daß** der Befestigungsstopfen am Kunstoff besteht.

10. Vorrichtung nach einem der Ansprüche 1 bis 8, **dadurch gekennzeichnet, daß** der Befestigungsstopfen zwischen seinem Kopf (5) und seinem Rastfuß (6) einen Zentrieransatz (22) besitzt.

11. Vorrichtung nach einem der Ansprüche 1 bis 10, **dadurch gekennzeichnet, daß** der Montagewinkel der Rastflügel zur Lochkante flach ist, sodaß ein hoher Toleranzausgleich Bohrung-Federweg erhältlich ist.

## Claims

1. A device for fastening component parts, such as metal sheets, insulating materials, or mats, to support members, such as car bodies, with a fastening plug, which has a head section, a foot section engaging behind the support member and which can be inserted through holes in the component part and in the support member and is embodied as a snap-in base, which can snap in behind the support member, and a center part connecting the head section to the support member, **characterized in that** the snap-in base (6) has at least one snap-in tab (20) extending from a substantially cylindrical shape outward, and which during insertion through the holes (7, 8) in the component part and the support member resiliently moves away towards the axis, and after insertion returns to the outward orientation thereof so as to snap in behind the support member, wherein the snap-in base (6) is made starting from a cup shape and has at least one segment (16) cut out in the side wall of the cup and extending circumferentially over a defined angle, and at least one of the edge areas thereof is made as a snap-in tab (20).

2. The device according to claim 1, **characterized in that** the foot section (6) of the fastening plug has two snap-in tabs (20) diametrically opposed to each other.

3. The device according to claim 1 or 2, **characterized in that** the bottom (15) of the cup is made integral at the free end of a web (10) forming the center part.

4. The device according to claim 3, **characterized in that** the web (10) has a width which is equal to the diameter of the bottom of the cup (15), and that a segment (16) extends from the web in the circumferential direction over said angle.

5. The device according to claim 4, **characterized in that** the free side edge (19) of a segment (16) is inclined with respect to a radial plane, so that the free circumferential edge of the segment is longer than the circumferential edge in the area of the bottom of the cup (15), and **in that** the free end area of the segment forms said snap-in tab (20).

6. The device according to claim 5, **characterized in that** the snap-in tab is created by laterally shaping the free end of the segment.

7. The device according to claim 5, **characterized in that** the snap-in tab extends tangentially.

8. The device according to any of claims 1 to 7, **characterized in that** the circumferential angle of the segment is of the order of 45° to 135°, preferably 90°.

9. The device according to any of claims 1 to 8, **characterized in that** the fastening plug is composed of plastic.

10. The device according to any of claims 1 to 8, **characterized in that** the fastening plug has a centering shoulder (22) between the head (5) and the snap-in base (6) thereof.

11. The device according to any of claims 1 to 10, **characterized in that** the mounting angle of the snap-in tabs is flat with respect to the edge of the hole, so that high tolerance compensation can be obtained between bore and spring travel.

## Revendications

1. Dispositif pour la fixation d'éléments de construction, comme des tôles, des matériaux isolants ou des nattes, sur des éléments de support, comme des carrosseries automobiles, avec un bouchon de fixation qui possède un élément de tête, un élément de pied passant derrière l'élément de support et insérable à travers des trous dans l'élément de construction et dans l'élément de support et réalisé comme une base d'enclenchement pouvant s'enclencher derrière l'élément de support, et un élément central reliant l'élément de tête à l'élément de support, **caractérisé en ce que** la base d'enclenchement (6) possède au moins une patte d'enclenchement (20) s'étendant vers l'extérieur à partir d'une forme substantiellement cylindrique et qui lors de l'insertion à travers les trous (7, 8) dans l'élément de construction et dans l'élément de support s'écarte de façon élastique en direction de l'axe et reprend après l'insertion son orientation dirigée vers l'extérieur en vue d'un enclenchement derrière l'élément de support, dans lequel la base d'enclenchement (6) est réalisée en partant d'une forme de pot et possède au moins un segment (16) découpé dans la paroi latérale du pot et qui s'étend en circonférence sur un angle défini, et au moins l'une de ses zones de bord libres est réalisée comme une patte d'enclenchement (20).

2. Dispositif selon la revendication 1, **caractérisé en ce que** l'élément de base (6) du bouchon de fixation possède deux pattes d'enclenchement (20) diamétralement opposées l'une à l'autre.

3. Dispositif selon la revendication 1 ou 2, **caractérisé en ce que** le fond (15) du pot est rapporté à l'extrémité libre d'une entretoise (10) formant l'élément central.

4. Dispositif selon la revendication 3, **caractérisé en ce que** l'entretoise (10) possède une largeur qui est égale au diamètre du fond de pot (15) et **en ce qu'**un segment (16) s'étend à partir de l'entretoise dans la direction circonférentielle sur ledit angle.

5. Dispositif selon la revendication 4, **caractérisé en ce que** le bord latéral libre (19) d'un segment (16) est incliné par rapport à un plan radial, de sorte que le bord circonférentiel libre du segment est plus long que le bord circonférentiel dans la zone du fond de pot (15) et **en ce que** la zone d'extrémité libre du segment constitue ladite patte d'enclenchement (20).

6. Dispositif selon la revendication 5, **caractérisé en ce que** la patte d'enclenchement est créée par un formage latéral de l'extrémité libre du segment.

7. Dispositif selon la revendication 5, **caractérisé en ce que** la patte d'enclenchement s'étend de façon tangentielle.

8. Dispositif selon l'une quelconque des revendications 1 à 7, **caractérisé en ce que** l'angle circonférentiel du segment se situe dans l'ordre de grandeur de 45° à 135°, de préférence de 90°.

9. Dispositif selon l'une quelconque des revendications 1 à 8, **caractérisé en ce que** le bouchon de fixation est composé de matière plastique.

10. Dispositif selon l'une quelconque des revendications 1 à 8, **caractérisé en ce que** le bouchon de fixation possède entre sa tête (5) et sa base d'enclenchement (6) un épaulement de centrage (22).

11. Dispositif selon l'une quelconque des revendications 1 à 10, **caractérisé en ce que** l'angle de montage des pattes d'enclenchement par rapport au bord du trou est plat, de sorte qu'une compensation de tolérance élevée peut être obtenue entre l'alésage et le débattement.
